# EUROPEAN PATENT SPECIFICATION

(11) **EP 3 393 872 B1**
(45) Date of publication and mention of the grant of the patent: **30.10.2019**
(21) Application number: 16819572.5
(22) Date of filing: 22.12.2016
(51) Int. Cl.: B60T 17/08, F16D 55/226, F16D 65/18

(54) **DISC BRAKE AND METHOD FOR MANUFACTURING THE SAME**
BREMSSATTELDICHTUNG UND VERFAHREN ZUR HERSTELLUNG DAVON
ÉTANCHEITÉ POUR ÉTRIER D'UN FREIN À DISQUE ET SON PROCÉDÉ DE FABRICATION

(30) Priority: 22.12.2015 EP 15202228
(43) Date of publication of application: 31.10.2018
(73) Proprietor: Haldex Brake Products AB, 261 24 Landskrona (SE)
(72) Inventor: SANDBERG, Stefan, 23435 Lomma (SE)
(74) Representative: Habermann, Hruschka & Schnabel
(86) International application number: PCT/EP2016/082510
(87) International publication number: WO 2017/109152

(56) References cited:
- EP-A1- 2 520 820
- WO-A1-2014/147548
- WO-A2-2011/113554

## Description

The present invention relates to a disc brake, in particular for a utility vehicle, and to a method for manufacturing and assembly, respectively, of such a disc brake.

In this connection the invention shall include disc brakes which either comprise a sliding caliper or a fixed caliper, which overlap one or more brake discs. Mainly but not exclusively the invention relates to disc brakes of the spot-type.

Disc brakes, in particular for heavy load trucks, are known with different configurations, both with respect to the type of the actuation mechanism, with respect to the way of the transmission of the braking force onto one or several brake discs and with respect to the type of the adjustment for compensating the brake lining wear.

With respect to the brake actuation mechanism, the present invention shall preferably, but not exclusively, relate to a single tappet design as it is known e.g. from International patent application WO 2011/113554 A2 of the applicant, in which the elements of the return mechanism and the adjustment mechanism are incorporated into the tappet design and surrounded by the unit consisting of the outer and inner sleeves, which both form part of the adjustment mechanism and thus brake actuation mechanism. The outer sleeve is configured as a thrust element comprising a radial inner thread which is in engagement with a radial outer thread of an adjustment spindle of the adjustment mechanism. The adjustment mechanism incorporated therein is driven by a rotatable lever, which introduces the clamping force from an actuator into the brake actuation mechanism.

Since for assembly purposes such brake actuator designs are commonly introduced into the interior of the caliper through an opening at the brake disc-side of the caliper, it is crucial to protect the brake actuation mechanism to the outside from dirt, moisture, abrasion particles etc.. For that purpose a sealing device is used and ideally arranged between the inner wall of the brake caliper interior and the outer surface or circumference of that element, which advances towards the brake disc upon brake actuation, such as the thrust element of single-tappet designs or such as the crossbar or traverse of double-tappet designs of brake actuation mechanisms.

The sealing device could be made as a rotationally symmetric sealing ring or as some kind of bellow or sleeve which itself can roll up or unroll when moving together with the advancing element, which provides the braking force onto the brake disc. The sealing device therefore has to be fixedly mounted both at an inner wall segment of the brake caliper and at corresponding segments of said element.

For instance, the brake actuation mechanism as disclosed in the afore-mentioned WO 2011/113554 A2 comprises a sealing sleeve which will be mounted at its respective position between the corresponding inner section of the brake caliper and the thrust element by means of a separate tool after the components of the brake actuation mechanism have been assembled. The bellow or sealing sleeve is already fixed with one inner ring to the outer radial circumference of the thrust element, when the latter will be inserted into the brake caliper, with the one outer ring of the sleeve staying to be freely movable.

The gasket or sealing sleeve will be mounted by means of several auxiliary assembly means. A push sleeve tool, which is formed of two halves being pivotably arranged to each other, cooperates with and is guided by a clamp-like support tool, which will be attached to the disc brake upon assembly in such a way that it overlaps the brake caliper outside and underneath of it. The support tool thereby forms the guidance and counterfort for the push sleeve tool. The push sleeve tool attaches with its face surface to the free radial end of the gasket. Then the entire support tool together with the push sleeve tool can be moved in relation to the brake caliper, so that the free radial end or ring of the sealing sleeve or gasket, which may additionally comprise a stiffening metal insert, will be advanced into the interior of the brake caliper till it comes into attachment and abuts against a correspondingly shaped radial inner surface, segment, groove or similar at the inner wall of the brake caliper. Being finally positioned the free end can be interlocked with the abutment surface of the brake caliper, e.g. by engagement means, gluing or similar. After that, the auxiliary assembly tools will be removed.

This particular way of assembly of the sealing mechanism is cumbersome, as it requires additional tools, which furthermore have to be specifically designed and manufactured for that purpose and which have to be maintained by the assembly or overhaul personnel, which adds to the costs.

Based on that, independent from the actual design of the brake actuation mechanism to be employed in this context, the invention aims for a new way of assembly of such a sealing device in disc brakes to be arranged between the brake actuation mechanism and the brake caliper, which assembly can be performed in an easy and cost-effective manner.

This object is solved by a disc brake according to claim 1 and by a method for manufacturing such a disc brake according to claim 13.

According to the invention a disc brake is proposed which comprises a brake caliper, which overlaps at least one brake disc, and a brake actuation mechanism having
- a thrust element for transmitting a clamping force onto the brake disc, and
- a gasket adapted to be arranged between said thrust element and said brake caliper and comprising an outer ring and an inner ring enclosing a sleeve being relatively movable to each other,
in which the brake caliper comprises at least one segment being adapted to fixedly receive said outer ring of the gasket,
in which the thrust element comprises at least one segment being adapted to fixedly receive said inner ring of the gasket, and
in which the thrust element comprises at least one supporting means for releasably receiving said outer ring of the gasket.

If the brake actuation mechanism is configured in a single-tappet design as described above, the gasket is preferably configured as a rotationally symmetric bellow-type sealing sleeve, which correspondingly comprises an inner radial ring being fixedly attached to the circumference of the rotationally symmetric thrust element and a radial outer ring adapted to be attached to the at least one segment of the brake caliper, which preferably is congruently shaped to the outer ring and rotationally symmetric as well, and which radial outer ring is furthermore adapted to be releasably received by the at least one supporting means of the thrust element. The at least one supporting means is thus configured and arranged to radially support the radial outer ring of the gasket.

However, the design of the gasket, of the segment of the brake caliper and of the supporting means of the thrust element is not limited to rotational symmetric embodiments. In principle, the inventive concept as described can be realized for all kind of combinations, in which gaskets can be employed, which as such allow the rolling up and unrolling of their sleeve part between their distal ends when at least one of the distal ends remains stationary. Such gaskets could include oval, elliptic or rectangular shapes having adequate curved edges.

Therefore, according to the invention, the outer ring of the gasket is received by the supporting means of the thrust element in a releasably manner before the brake actuation mechanism becomes finally assembled in the interior of the brake caliper. The means shall be configured and arranged in such a way that it is able to hold the gasket in the preassembled condition in a self-contained way. In other words, during such assembly the outer ring shall be automatically or by itself become released from the supporting means, when there is some kind of external influence, such as a force applied to the outer ring. This will be described in detail with respect to the method according to the invention further down below.

According to one embodiment, the supporting means extends lengthwise in relation to the thrust element, i.e. co-axially with respect to the axis of the brake disc or with respect to the longitudinal extension of the thrust element.

According to another embodiment, the supporting means may at least in sections radially surround the thrust element; preferably such supporting means may extend along the entire circumference of a preferably rotational symmetric axial section of the thrust element.

In order to provide that the gasket will be received on the supporting means in such a way, that it remains stationary upon insertion of the thrust element into the interior of the brake caliper, but will be released in response to an external influence or force, the supporting means may be inclined towards the brake disc. In axial direction, such inclination will provide then such width or diameter that the means safely holds the outer ring of the gasket at a certain axial position.

According to a preferred embodiment, the means could comprise an abutment step, against which the outer ring of the gasket will abut, so that it cannot be moved on the thrust element further towards the brake disc, but away from it.

Several supporting means may be provided and arranged circumferentially around the thrust element, preferably with an even distribution, so that the gasket will be uniformly mounted and held on the thrust element, which precludes any tensions or distortions or displacements in axial and/or radial directions, which in the following may interfere with a smooth assembly process of the gasket.

If according to another embodiment the supporting means do radially surround the thrust element, an abutment ring is provided close to such means, which abutment ring itself radially surrounds a corresponding axial section of the thrust element, preferably over the entire circumference.

According to a preferred embodiment, the thrust element is mounted in the brake caliper by means of a rod, which rod is supported in the housing of the brake caliper so as to be not displaceable in axial direction.

The thrust element may be mounted by that rod together with other components of the brake actuation mechanism, such as e.g. an amplification mechanism including a brake lever, in functional cooperation. For example, such configuration, in which all single components of the brake actuation mechanism are configured and arranged in such a way that the cooperation with the rod, is described in detail in the International patent application WO 2011/113554 A2 in the name of the applicant, the disclosure of which shall herewith be exclusively included by reference.

In other words, the rod shall serve as the mounting means which keeps the single components of the brake actuation mechanism, such as the amplification mechanism, the adjuster, the thrust element, the return device and the lever, together in functional cooperation, wherein these components could be split into different self-supporting sub-modules or units for assembly purposes.

For such design and configuration of the brake actuation mechanism, the thrust element is rotationally symmetric at least with respect to the part which comprises the supporting means. Accordingly, such supporting means are radially and circumferentially, preferably equidistantly, arranged on the outer surface or radially extend over the entire circumference of it. At the same time the gasket is configured to be rotationally symmetric as well with the radial outer and radial inner rings.

In particular for such a configuration of the gasket and the thrust element, according to the invention, it is provided further that in axial direction with respect to the brake disc the longitudinal position of the segment of the brake caliper on the one hand and the longitudinal position of the supporting means of the thrust element on the rod on the other are defined so that upon assembly of the brake actuation mechanism, when the thrust element is finally positioned in its idle mode, i.e. more or less being completely retracted inside the brake caliper, the outer ring of the gasket comes into fixed connection with the segment of the brake caliper thereby being released from the supporting means of the thrust element.

According to a preferred embodiment, the tolerances of the segment means of the brake caliper, of the outer ring of the gasket and of the supporting means of the thrust element in a direction being traverse to the axis of the brake disc (i.e. in case of a single-tappet design the tolerances would refer to the different radial orientations of the components in question) shall be dimensioned so as to allow both release of the outer ring from said supporting means of the thrust element and its fixation at the segment of the brake caliper, when the thrust element has reached its idle mode position upon assembly of the brake actuation mechanism.

According to a still further embodiment of the invention, the preferably radial supporting means shall be configured to force, i.e. push, the preferably radial outer ring into fixed connection with the preferably radial segment of the brake caliper, when the thrust element is positioned in its idle mode.

In one embodiment the supporting means is integral with the body of the thrust element, e.g. casted therewith, wherein the supporting means are arranged at the outer surface of the thrust element, correspondingly.

Alternatively, in another embodiment, the supporting means are formed as at least one separate element, which is configured to be, preferably releasably, attached to the body of the thrust element. Such supporting means could be formed as a ring which entirely surrounds the body of the thrust element and which comprises an inclined circular section for receiving the gasket as described above in connection with the integral supporting means.

Preferably such separate supporting means comprises at least one engagement means, such as e.g. radially protruding spring tongues or similar, which are configured to engage with corresponding counter-elements in the caliper to fix the supporting means thereto and thereby fix the gasket with the caliper after assembly. It is also possible that such separate supporting means enter into a simple press-fit with the inner circular receiving section of the caliper.

In this connection, the present invention further relates to a method for manufacturing a disc brake comprising a brake caliper, which overlaps at least one brake disc, and a brake actuation mechanism having
- an adjustment mechanism for compensating wear of a brake pad, the adjustment mechanism being in connection with a reset device,
- a thrust element for transmitting a clamping force onto the brake disc by means of the brake pad,
- a gasket adapted to be arranged between said thrust element and said brake caliper and comprising an outer ring and an inner ring enclosing a sleeve being relatively movable to each other,
comprising the steps of
- mounting the gasket on the thrust element so that said inner ring of the gasket becomes fixedly connected to the thrust element and said outer ring of the gasket becomes releasably received on at least one supporting means of the thrust element,
- inserting the thrust element with the gasket into the brake caliper through an opening from the brake disc-side,
- connecting the thrust element with the adjustment mechanism,
- activating the reset device so that the thrust element is connected to the adjustment mechanism thereby moving axially away from the brake disc,
wherein the activation of the reset device is performed until the outer ring of the gasket is fixed to a segment of the brake caliper.

The reset device may be configured as this is disclosed in detail in the International patent application WO 2011/113554 A2 in the name of the applicant, comprising a pinion meshing with a rotatable part of the adjustment mechanism. Basically, it shall be a device with which normally the adjustment mechanism, in particular an adjustment spindle cooperating or meshing with the thrust element could be reset or retracted for the purpose of change of worn brake pads.

According to the invention, the method may further comprise the step of
- activating the brake actuation mechanism so that the thrust element is moving axially towards the brake disc thereby releasing the outer ring of the gasket from the supporting means of the thrust element, in which the supporting means are preferably integral with the thrust element.

If the supporting means are separate from the body of the thrust element, such method alternatively further comprises the step of
- activating the brake actuation mechanism so that the thrust element is moving axially towards the brake disc thereby releasing the supporting element together with the outer ring of the gasket from the body of the thrust element thereby allowing engagement of the supporting means with the segment of the brake caliper.

Further advantages and features of the present invention do become apparent with respect to the embodiments shown in the attached drawings, in which
- Fig. 1: is a perspective explosive view of a thrust element and a gasket according to the invention;
- Fig. 2: is a perspective view of the gasket being mounted on the thrust element in a first position;
- Fig. 3: is a perspective view of the gasket being mounted on the thrust element in a second position;
- Fig. 4: is a perspective, partially cut-out view of a brake actuation mechanism to be mounted inside a brake caliper in a first position;
- Fig. 5: is a further perspective, partially cut-out view of a brake actuation mechanism being mounted inside a brake caliper in a second position;
- Fig. 6: is a perspective view of a thrust element with a gasket according to a further embodiment; and
- Fig. 7a: a perspective view of a thrust element with a separate supporting means according to a still further embodiment; and
- Fig. 7b: a perspective cross-sectional view of said thrust element.

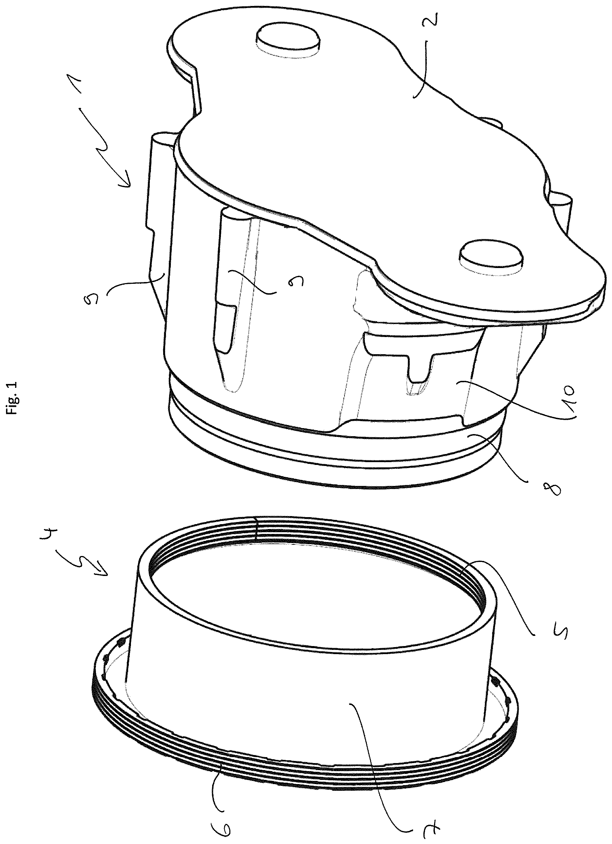

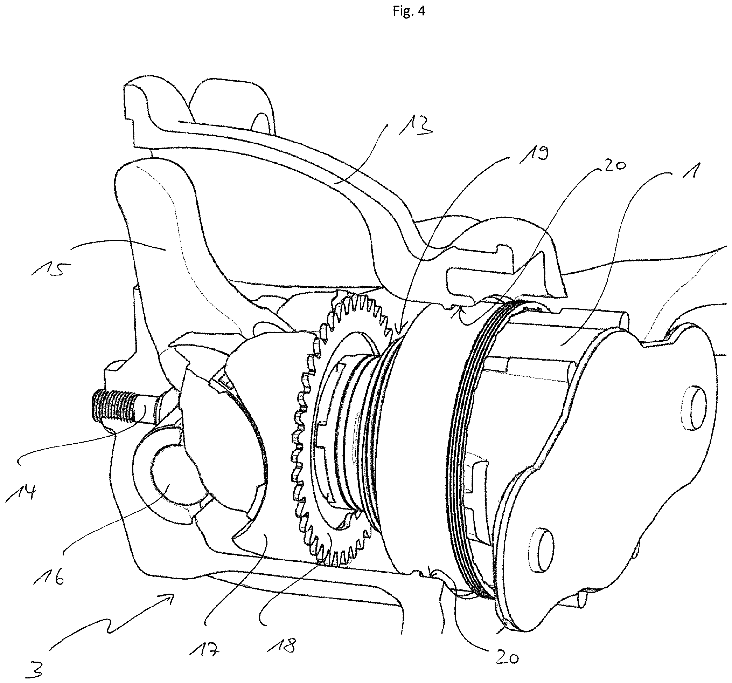

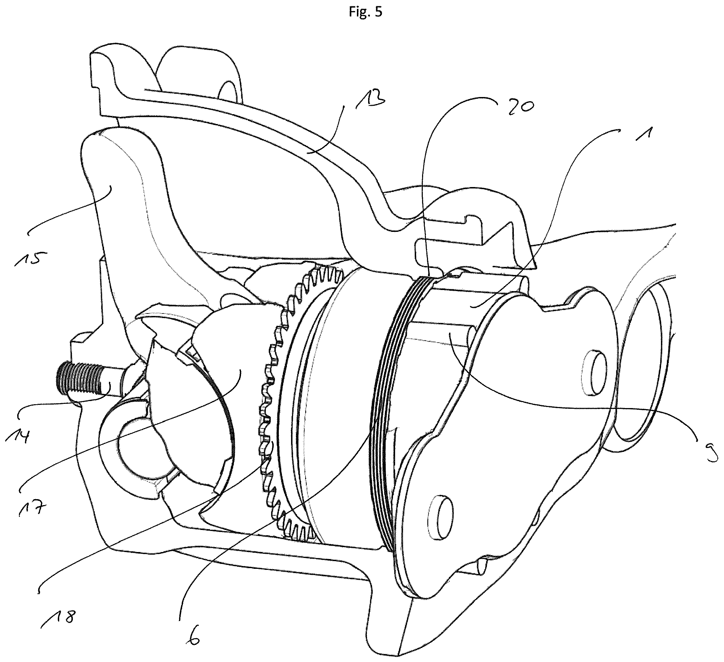

Fig. 1 shows in explosive view a substantially rotationally symmetric thrust element 1, which comprises a thrust plate 2 for further connection to a not-shown brake pad. The thrust element 1 is part of a brake actuation mechanism 3 as it is shown in Figs. 4 and 5. The configuration and functioning of the brake actuation mechanism 3 shall substantially be similar to the one as disclosed in the above-mentioned International patent application WO 2011/113554 A2.

The thrust element 1 shall be connected to a gasket 4.

The gasket 4 is preferably configured as a bellows comprising a radial inner ring 5 and a radial outer ring 6, encompassing a sleeve 7 in-between.

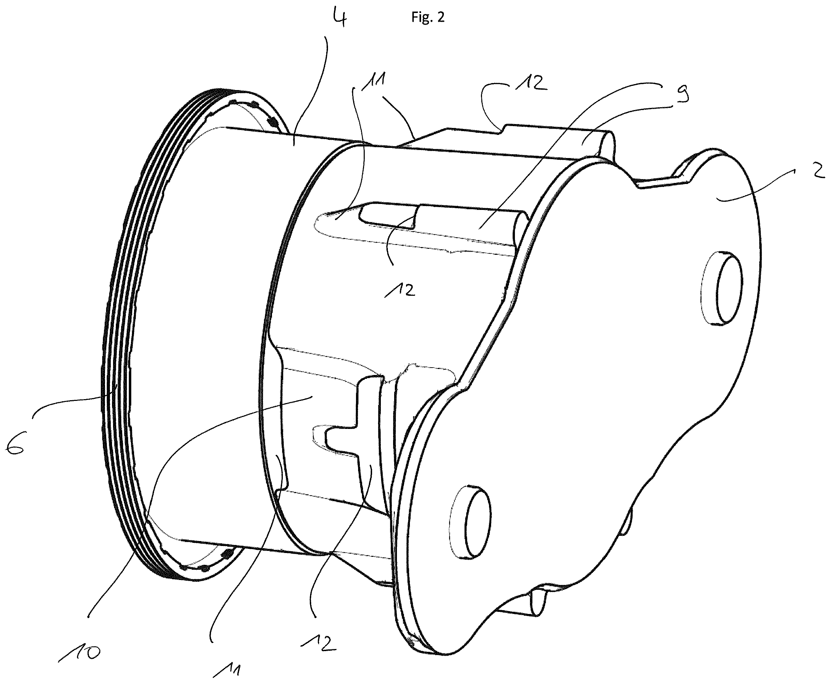

As can be seen in Fig. 2, the gasket 4 will be fixed to the thrust element 1, in that the radial inner ring 5 circumferentially attaches to or encloses a circular outer ring 8 of the thrust element 1, for example by means of press-fit or gluing or similar.

By that the gasket 4 is substantially permanently fixed to the thrust element 1, so that the radial outer ring 6 of the gasket 4 can be shifted over the thrust element 1, in that the sleeve 7 is turned and put on the thrust element 1 in its longitudinal direction.

The thrust element 1 comprises a series of circumferentially arranged and preferably equidistantly spaced apart supporting elements 9 and 10.

The supporting elements 9 and 10 are shaped as some kind of ribs, which extend in parallel to the longitudinal direction of the thrust element 1. The supporting elements 9 and 10 comprise an inclination 11, which hinders that the radial outer ring 6 will bump against the supporting elements 9 and 10 and be accidentally blocked, but will smoothly slide onto them.

Furthermore, the supporting elements 9 and 10 comprise abutments steps 12 at a certain position in longitudinal direction of the thrust element 1, which corresponds to a defined axial position when the thrust element 1 is mounted inside a housing of a brake caliper.

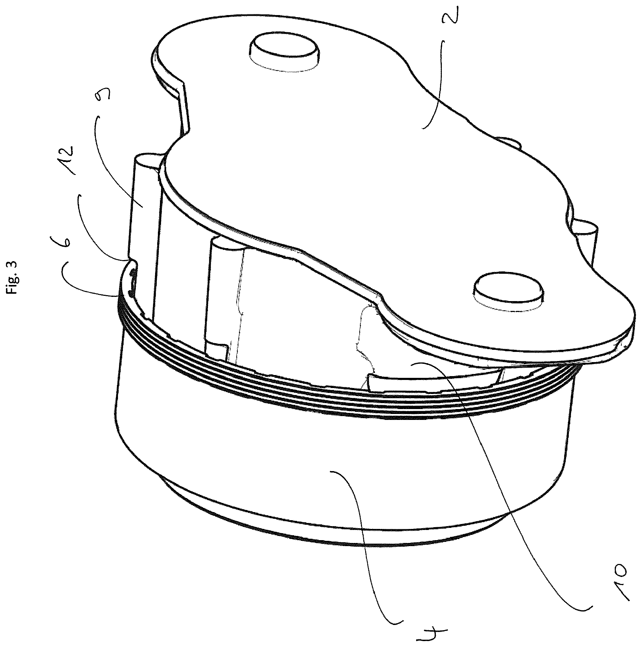

The gasket 4 is thus mounted on and connected to the thrust element 1 in that the radial inner ring 5 is fixed to the thrust element 1, while the radial outer ring 6 is free to slide on the supporting elements 9 and 10 (as can be seen in Fig. 3) so as to be releasable therefrom when needed.

This is exemplarily shown in the Figs. 4 and 5, which indicate different steps of the mounting process for the gasket 4.

The brake actuation mechanism 3 is to be mounted inside the housing of a brake caliper 13 by means of a central rod 14, which serves as mounting means for the different components of the brake actuation mechanism 3, which include a brake lever 15, which is mounted to be eccentrically rotatable around a pivot bearing 16, to transmit a clamping force via a transmission block 17 and a pinion 18 of a return device onto the thrust element 1 or onto a component of an adjustment mechanism 19 being arranged inside the thrust element 1. For a possible configuration and functioning of such a single-tappet type mechanism reference is made to WO 2011/113554 A2.

The interior of the housing of the brake caliper 13 comprises a circular segment 20 at a certain position when seen in axial direction with respect to the axis of the brake disc.

Fig. 4 shows the beginning of the process of mounting the gasket 4 inside the brake caliper 13.

The thrust element 1 with the gasket 4 fixed on it is inserted into the housing of the brake caliper 13, till the thrust element 1 engages with or becomes connected to further components of the brake actuation mechanism 3, such as with an adjustment spindle of the adjustment mechanism 19.

The adjustment spindle is rotatable by means of the pinion 18 of the reset device, so that the thrust element 1, since the latter is axially non-rotatably guided inside the brake caliper 13, will be moved towards the lever 15, i.e. axially away from the brake disc. The separate reset device is actually provided so as to bring the adjustment mechanism back into an axial position which enables the change of completely worn brake linings. The reset device is configured such that it can be actuated by a corresponding tool from the outside through a corresponding opening in the housing of the brake caliper 13. By simply turning a shaft of the reset device with a tool, the pinion 18 being directly or indirectly in connection with the adjustment spindle will be set into rotation, whereby the adjustment spindle can be rotated and due to the threaded engagement with the thrust element 1, the latter is drawn inside the brake caliper 13.

Such activation of the reset device is performed, till the radial outer ring 6 of the gasket comes into engagement with the circular segment 20 of the brake caliper 13, which is supported in that upon further advancement of the thrust element 1 the abutment steps 12 actually push the radial outer ring 6 into the segment 20, thereby enabling preferably a correspondingly dimensioned press-fit. This position is shown in Fig. 5, which basically corresponds to the final axial position of the thrust element 1 corresponding to the idle mode of the brake actuation mechanism 3.

Finally, the brake actuation mechanism 3 will be activated by a first pivoting movement of the lever 15, so that the thrust element 1 moves axially towards the brake disc. Since the radial outer ring 6 of the gasket 4 is now fixed inside the segment 20 of the brake caliper 13, the radial outer ring 6 will thereby be released from the supporting means 9 and 10 of the thrust element 1. The gasket 4 is finally mounted in its working position between the brake caliper 13 and the thrust element 1.

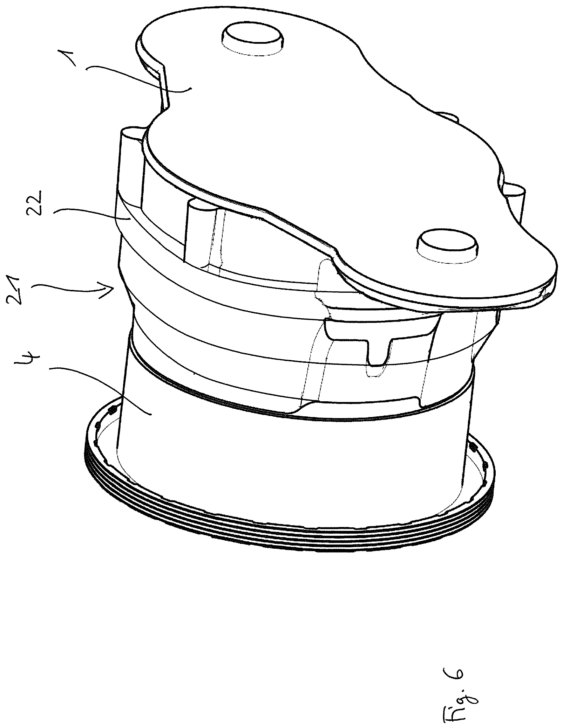

In Fig. 6 an alternative embodiment of the thrust element 1 according to the invention is shown. The supporting means are comprised of an entirely circumferentially surrounding ring 21 having an increased diameter with a corresponding inclined section, wherein the diameter and the inclination are selected to take up the gasket 4 as described. Axially following the increased diameter an abutment ring 22 is provided, against which the radial outer ring 6 of the gasket 4 comes into attachment.

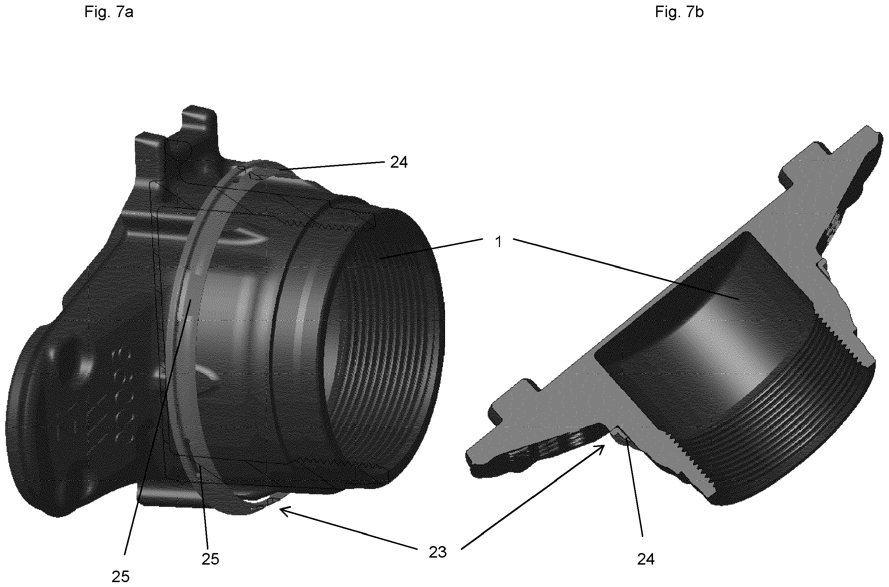

Figs. 7a and 7b exemplarily show a further embodiment according to the invention.

In this embodiment, the supporting means for the gasket is made as a separate ring 23, e.g. made from plastics, which is radially pushed onto the body of the thrust element 1. Such separate configuration has the advantage that already existing thrust elements 1 can be used and no re-design of the same becomes necessary for providing the supporting function for the gasket as desired by the invention. The ring 23 comprises a circumferential inclined section 24 for receiving the gasket 4 as described above. Furthermore, the ring 23 comprises engagement means in the shape of spring-like, radially protruding tongues 25, which will come into a fixed engagement with the section 20 of the brake caliper 13, when the thrust element 1 gets displaced into the interior of the brake caliper.

It becomes apparent that by carefully selecting, in axial direction with respect to the brake disc, the longitudinal position of the circular segment 20 of the brake caliper 13 on the one hand and the longitudinal position of the supporting means 9, 10 or 21, in particular of the abutment steps 12 or the abutment ring 22, or such position of a separate ring 23 on the thrust element 1 and the axial position of the latter on the rod 14 in the idle mode on the other, it is enabled that the radial outer ring 6 of the gasket 4 or the ring 23 exactly comes into fixed connection with the circular segment 20 of the brake caliper 13, while furthermore the careful selection of the radial tolerances between the circular segment 20, i.e. of its inner diameter, and the radial outer ring 6, i.e. of its outer diameter, or the separate supporting ring 23 generates the fixed connection between these components.

The method according to the invention allows the mounting of a gasket for brake actuation mechanisms of the known kind without the need for additional tools. Less care during assembly has to be taken by the personnel as well.

### List of reference numerals:

- 1: Thrust element
- 2: Thrust plate
- 3: Brake actuation mechanism
- 4: Gasket
- 5: Radial inner ring
- 6: Radial outer ring
- 7: Sleeve
- 8: Circumferential ring thrust element
- 9: Supporting elements
- 10: Supporting elements
- 11: Inclination
- 12: Abutment step
- 13: Brake caliper
- 14: Rod
- 15: Lever
- 16: Pivot bearing
- 17: Transmission block
- 18: Pinion/reset device
- 19: Adjustment mechanism
- 20: Circular segment brake caliper
- 21: Supporting ring
- 22: Abutment ring
- 23: Separate support ring
- 24: Inclined section
- 25: Engagement means

## Claims

1. Disc brake comprising a brake caliper (13), which overlaps at least one brake disc, and a brake actuation mechanism (3) having
- a thrust element (1) for transmitting a clamping force onto the brake disc, and
- a gasket (4) adapted to be arranged between said thrust element (1) and said brake caliper (13) and comprising an outer ring (6) and an inner ring (5) enclosing a sleeve (7) being relatively movable to each other,
in which the brake caliper (13) comprises at least one segment (20) being adapted to fixedly receive said outer ring (6) of the gasket (4), and
in which the thrust element (1) comprises at least one segment (8) being adapted to fixedly receive said inner ring (5) of the gasket (4),
**characterized in that**
the thrust element (1) comprises at least one supporting means (9,10,21;23) for releasably receiving said outer ring (6) of the gasket (4).

2. Disc brake of claim 1, in which the thrust element (1) is mounted in the brake caliper (13) by means of a rod (14), which rod (14) is supported in the housing of the brake caliper (13) so as to be not displaceable in axial direction, and
in which in axial direction with respect to the brake disc the longitudinal position of the segment (20) of the brake caliper (13) on the one hand and the longitudinal position of supporting means (9,10,21;23) on the thrust element (1) and of the thrust element (1) on the rod (14) on the other are defined so that upon assembly of the brake actuation mechanism (3), when the thrust element (1) is finally positioned in its idle mode, the outer ring (6) of the gasket (4) comes into fixed connection with the segment (20) of the brake caliper (13) thereby being released from the supporting means (9,10,21;23) of the thrust element (1).

3. Disc brake of claim 1 or 2, in which the tolerances of the segment (20) of the brake caliper (13), of the outer ring (6) of the gasket (4) and of the supporting means (9,10,21;23) of the thrust element (1) in a direction being traverse to the axis of the brake disc are dimensioned so as to allow both release of the outer ring (6) from said supporting means (9,10,21;23) of the thrust element (1) and its fixation at the segment (20) of the brake caliper (13), when the thrust element (1) has reached its idle mode position upon assembly of the brake actuation mechanism (3).

4. Disc brake of one of claims 1 to 3, in which the supporting means (9,10,21;23) extends lengthwise in relation to the thrust element (1).

5. Disc brake of one of claims 1 to 3, in which the supporting means (21;23) at least in sections radially surround the thrust element (1).

6. Disc brake of claim 4 or 5, in which the supporting means (9,10,21;23) is inclined towards the brake disc.

7. Disc brake of claim 4 or 5, in which the supporting means (9,10,21) comprise an abutment step (12), abutment ring sections or an abutment ring (22).

8. Disc brake of one of claims 4 to 7, in which the supporting means (9,10,21;23) is configured to force the outer ring (6) into fixed connection with the segment (20) of the brake caliper (13), when the thrust element (1) is positioned in its idle mode.

9. Disc brake of one of claims 4 to 8, in which several supporting means (9,10,21;23) are provided which are arranged circumferentially around the thrust element (1).

10. Disc brake of one of claims 1 to 9, in which the supporting means (9,10,21) is integral with the body of the thrust element (1).

11. Disc brake of one of claims 1 to 9, in which the supporting means (23) is formed as an element being separate from the body of the thrust element (1) and being configured to be attachable to said body.

12. Disc brake of claim 11, in which the supporting means (23) comprises as least one engagement means (25) being configured to cooperate with the brake caliper (13).

13. Method for manufacturing a disc brake comprising a brake caliper (13), which overlaps at least one brake disc, and a brake actuation mechanism (3) having
- an adjustment mechanism (19) for compensating wear of a brake pad, the adjustment mechanism (19) being in connection with a reset device (18),
- a thrust element (1) for transmitting a clamping force onto the brake disc by means of the brake pad,
- a gasket (4) adapted to be arranged between said thrust element 81) and said brake caliper (13) and comprising an outer ring (6) and an inner ring (5) enclosing a sleeve (7) being relatively movable to each other,
comprising the steps of
- mounting the gasket (4) on the thrust element (1) so that said inner ring (5) of the gasket (4) becomes fixedly connected to the thrust element (1) and said outer ring (6) of the gasket (4) becomes releasably received on at least one supporting means (9,10,21;23) of the thrust element (1),
- inserting the thrust element (1) with the gasket (4) into the brake caliper (13) through an opening from the brake disc-side,
- connecting the thrust element (1) with the adjustment mechanism (19),
- activating the reset device (18) so that the thrust element (1) is connected to the adjustment mechanism (19) thereby moving axially away from the brake disc, wherein the activation of the reset device (18) is performed until the outer ring (6) of the gasket (4) is fixed to a segment (20) of the brake caliper (13).

14. Method of claim 13, further comprising the step of
- activating the brake actuation mechanism (3) so that the thrust element (1) is moving axially towards the brake disc thereby releasing the outer ring (6) of the gasket (4) from the supporting means (9,10,21) of the thrust element (1).

15. Method of claim 13, further comprising the step of
- activating the brake actuation mechanism (3) so that the thrust element (1) is moving axially towards the brake disc thereby releasing the supporting element (23) with the outer ring (6) of the gasket (4) from the body of the thrust element (1) thereby allowing engagement of the supporting means (23) with the segment (20) of the brake caliper (13).

## Patentansprüche

1. Scheibenbremse aufweisend einen Bremssattel (13), der mindestens eine Bremsscheibe überlappt, und einen Bremsbetätigungsmechanismus (3) mit
- einem Druckelement (1) zur Übertragung einer Klemmkraft auf die Bremsscheibe, und
- einer Dichtung (4), die angepasst ist, zwischen dem Druckelement (1) und dem Bremssattel (13) angeordnet zu werden, und die einen Außenring (6) und einen Innenring (5) aufweist, die eine Hülse (7) einschließen und die relativ zueinander beweglich sind,
wobei der Bremssattel (13) mindestens ein Segment (20) aufweist, das angepasst ist, um den Außenring (6) der Dichtung (4) fest aufzunehmen, und
wobei das Druckelement (1) mindestens ein Segment (8) aufweist, das angepasst ist, um den Innenring (5) der Dichtung (4) fest aufzunehmen,
**dadurch gekennzeichnet, dass**
das Druckelement (1) mindestens ein Haltemittel (9,10,21;23) zur lösbaren Aufnahme des Außenrings (6) der Dichtung (4) aufweist.

2. Scheibenbremse nach Anspruch 1, bei der das Druckelement (1) mittels einer Stange (14) im Bremssattel (13) gelagert ist, welche Stange (14) im Gehäuse des Bremssattels (13) in axialer Richtung nicht verschiebbar gelagert ist, und
bei der in axialer Richtung in Bezug auf die Bremsscheibe die Längsposition des Segments (20) des Bremssattels (13) einerseits und die Längsposition der Haltemittel (9,10,21;23) auf dem Druckelement (1) und des Druckelements (1) auf der Stange (14) andererseits so definiert sind, dass bei der Montage des Bremsbetätigungsmechanismus (3), wenn das Druckelement (1) abschließend in seinem Ruhezustand positioniert ist, der Außenring (6) der Dichtung (4) mit dem Segment (20) des Bremssattels (13) eine feste Verbindung eingeht und dadurch von den Haltemitteln (9,10,21;23) des Druckelements (1) freigegeben wird.

3. Scheibenbremse nach Anspruch 1 oder 2, bei der die Toleranzen des Segments (20) des Bremssattels (13), des Außenrings (6) der Dichtung (4) und der Haltemittel (9,10,21;23) des Druckelements (1) in einer Richtung, die zur Achse der Bremsscheibe quer verläuft, so bemessen sind, dass sowohl die Freigabe des Außenrings (6) von den Haltemitteln (9,10,21;23) des Druckelements (1) als auch dessen Befestigung am Segment (20) des Bremssattels (13) ermöglicht wird, wenn das Druckelement (1) bei der Montage des Bremsbetätigungsmechanismus (3) seine Ruheposition erreicht hat.

4. Scheibenbremse nach einem der Ansprüche 1 bis 3, bei der sich die Haltemittel (9,10,21;23) in Längsrichtung in Bezug auf das Druckelement (1) erstrecken.

5. Scheibenbremse nach einem der Ansprüche 1 bis 3, bei der die Haltemittel (21;23) zumindest abschnittsweise das Druckelement (1) radial umgeben.

6. Scheibenbremse nach Anspruch 4 oder 5, bei der die Haltemittel (9,10,21;23) zur Bremsscheibe geneigt sind.

7. Scheibenbremse nach Anspruch 4 oder 5, bei der die Haltemittel (9,10,21) eine Anschlagsstufe (12), Anschlagsringabschnitte oder einen Anschlagsring (22) aufweisen.

8. Scheibenbremse nach einem der Ansprüche 4 bis 7, bei der die Haltemittel (9,10,21;23) konfiguriert sind, um den Außenring (6) in eine feste Verbindung mit dem Segment (20) des Bremssattels (13) zu zwingen, wenn das Druckelement (1) in seinem Ruhezustand positioniert ist.

9. Scheibenbremse nach einem der Ansprüche 4 bis 8, bei der mehrere Haltemittel (9,10,21;23) vorgesehen sind, die um das Druckelement (1) herum angeordnet sind.

10. Scheibenbremse nach einem der Ansprüche 1 bis 9, bei der die Haltemittel (9,10,21) mit dem Körper des Druckelements (1) integral ausgebildet sind.

11. Scheibenbremse nach einem der Ansprüche 1 bis 9, bei der die Haltemittel (23) als Element ausgebildet sind, das vom Körper des Druckelements (1) getrennt und so ausgebildet ist, dass es an dem Körper befestigbar ist.

12. Scheibenbremse nach Anspruch 11, bei der das Haltemittel (23) mindestens ein Eingriffsmittel (25) aufweist, das für ein Zusammenwirken mit dem Bremssattel (13) konfiguriert ist.

13. Verfahren zur Herstellung einer Scheibenbremse aufweisend einen Bremssattel (13), der mindestens eine Bremsscheibe überlappt, und einen Bremsbetätigungsmechanismus (3) mit
- einem Nachstellmechanismus (19) zum Kompensieren des Verschleißes eines Bremsbelags, wobei der Nachstellmechanismus (19) in Verbindung mit einer Rückstellvorrichtung (18) steht,
- einem Druckelement (1) zum Übertragen einer Klemmkraft auf die Bremsscheibe mittels des Bremsbelags,
- einer Dichtung (4), die angepasst ist, um zwischen dem Druckelement 81) und dem Bremssattel (13) angeordnet zu werden und die einen Außenring (6) und einen Innenring (5) aufweist, die eine Hülse (7) einschließen und die relativ zueinander beweglich sind,
aufweisend die Schritte
- Montieren der Dichtung (4) auf dem Druckelement (1), so dass der Innenring (5) der Dichtung (4) fest mit dem Druckelement (1) verbunden wird und der Außenring (6) der Dichtung (4) lösbar auf mindestens einem Haltemittel (9,10,21;23) des Druckelements (1) aufgenommen wird,
- Einfügen des Druckelements (1) mit der Dichtung (4) in den Bremssattel (13) durch eine Öffnung von der Bremsscheibenseite,
- Verbinden des Druckelements (1) mit dem Nachstellmechanismus (19),
- Aktivieren der Rückstellvorrichtung (18), so dass das Druckelement (1) mit dem Nachstellmechanismus (19) verbunden wird und sich dadurch axial von der Bremsscheibe weg bewegt, wobei die Aktivierung der Rückstellvorrichtung (18) durchgeführt wird, bis der Außenring (6) der Dichtung (4) an einem Segment (20) des Bremssattels (13) befestigt ist.

14. Verfahren nach Anspruch 13, ferner aufweisend den Schritt
- Aktivieren des Bremsbetätigungsmechanismus (3), so dass sich das Druckelement (1) axial auf die Bremsscheibe zu bewegt und dadurch den Außenring (6) der Dichtung (4) von den Haltemitteln (9,10,21) des Druckelements (1) freigibt.

15. Verfahren nach Anspruch 13, ferner aufweisend den Schritt
- Aktivieren des Bremsbetätigungsmechanismus (3), so dass sich das Druckelement (1) axial auf die Bremsscheibe zu bewegt und dadurch das Halteelement (23) mit dem Außenring (6) der Dichtung (4) vom Körper des Druckelements (1) freigibt, wodurch ein Eingriff des Haltemittels (23) mit dem Segment (20) des Bremssattels (13) ermöglicht wird.

## Revendications

1. Frein à disque comprenant un étrier de frein (13) qui chevauche au moins un disque de frein et un mécanisme d'actionnement de frein (3) comportant
- un élément de poussée (1) pour transmettre une force de serrage sur le disque de frein, et
- un joint (4) adapté pour être agencé entre ledit élément de poussée (1) et ledit étrier de frein (13) et comprenant une bague extérieure (6) et une bague intérieure (5) renfermant un manchon (7) pouvant être déplacées l'une par rapport à l'autre,
dans lequel l'étrier de frein (13) comprend au moins un segment (20) apte à recevoir de manière fixe ladite bague extérieure (6) du joint (4), et
dans lequel l'élément de poussée (1) comprend au moins un segment (8) apte à recevoir de manière fixe ladite bague intérieure (5) du joint (4),
**caractérisé en ce que**
l'élément de poussée (1) comprend au moins un moyen de support (9, 10, 21 ; 23) destiné à recevoir de manière amovible ladite bague extérieure (6) du joint (4).

2. Frein à disque selon la revendication 1, dans lequel l'élément de poussée (I) est monté dans l'étrier de frein (13) au moyen d'une tige (14), laquelle tige (14) supportée dans le logement de l'étrier de frein (13) de manière à ne pas pouvoir être déplacée dans une direction axiale, et
dans lequel dans une direction axiale par rapport au disque de frein, la position longitudinale du segment (20) de l'étrier de frein (13), d'une part, et la position longitudinale du moyen de support (9, 10, 21 ; 23) sur l'élément de poussée (1) et de l'élément de poussée (1) sur la tige (14), d'autre part, sont définis de telle sorte que lors de l'assemblage du mécanisme d'actionnement de frein (3), lorsque l'élément de poussée (1) est finalement positionné dans son mode inactif, la bague extérieure (6) du joint (4) vient en connexion fixe avec le segment (20) de l'étrier de frein (13), en étant ainsi libérée du moyen de support (9, 10, 21 ; 23) de l'élément de poussée (1).

3. Frein à disque selon la revendication 1 ou 2, dans lequel les tolérances du segment (20) de l'étrier de frein (13), de la bague extérieure (6) du joint (4) et du moyen de support (9, 10, 21 ; 23) de l'élément de poussée (1) dans une direction transversale à l'axe du disque de frein sont dimensionnées de manière à permettre à la fois la libération de la bague extérieure (6) à partir dudit moyen de support (9, 10, 21 ; 23) de l'élément de poussée (1) et sa fixation au segment (20) de l'étrier de frein (13), lorsque l'élément de poussée (1) a atteint sa position de mode inactif lors de l'assemblage du mécanisme d'actionnement de frein (3).

4. Frein à disque selon l'une des revendications 1 à 3, dans lequel le moyen de support (9, 10, 21 ; 23) s'étend longitudinalement par rapport à l'élément de poussée (1).

5. Frein à disque selon l'une des revendications 1 à 3, dans lequel le moyen de support (21 ; 23) entoure radialement l'élément de poussée (1) au moins par sections.

6. Frein à disque selon la revendication 4 ou 5, dans lequel le moyen de support (9, 10, 21 ; 23) est incliné vers le disque de frein.

7. Frein à disque selon la revendication 4 ou 5, dans lequel le moyen de support (9, 10, 21) comprend un gradin de butée (12), des sections de bague de butée ou une bague de butée (22) .

8. Frein à disque selon l'une des revendications 4 à 7, dans lequel le moyen de support (9, 10, 21 ; 23) est configuré pour forcer la bague extérieure (6) en connexion fixe avec le segment (20) de l'étrier de frein (13), lorsque l'élément de poussée (1) est positionné dans son mode inactif.

9. Frein à disque selon l'une des revendications 4 à 8, dans lequel plusieurs moyens de support (9, 10, 21 ; 23) sont prévus, qui sont agencés circonférentiellement autour de l'élément de poussée (1).

10. Frein à disque selon l'une des revendications 1 à 9, dans lequel le moyen de support (9, 10, 21) est d'un seul tenant avec le corps de l'élément de poussée (1).

11. Frein à disque selon l'une des revendications 1 à 9, dans lequel le moyen de support (23) est formé sous la forme d'un élément séparé du corps de l'élément de poussée (1) et configurés pour pouvoir être fixés audit corps.

12. Frein à disque selon la revendication 11, dans lequel le moyen de support (23) comprend au moins un moyen de mise en prise (25) configuré pour coopérer avec l'étrier de frein (13) .

13. Méthode de fabrication d'un frein à disque comprenant un étrier de frein (13), qui chevauche au moins un disque de frein, et un mécanisme d'actionnement de frein (3) comportant
- un mécanisme d'ajustement (19) pour compenser l'usure d'une plaquette de frein, le mécanisme d'ajustement (19) étant en connexion avec un dispositif de réinitialisation (18),
- un élément de poussée (1) pour transmettre une force de serrage sur le disque de frein au moyen de la plaquette de frein,
- un joint (4) adapté pour être agencé entre ledit élément de poussée 81) et ledit étrier de frein (13) et comprenant une bague extérieure (6) et une bague intérieure (5) renfermant un manchon (7) pouvant être déplacées l'un par rapport à l'autre, comprenant les étapes consistant à
- monter le joint (4) sur l'élément de poussée (1) de sorte que ladite bague intérieure (5) du joint (4) soit connectée de manière fixe à l'élément de poussée (1) et que ladite bague extérieure (6) du joint (4) soit reçue de manière amovible sur au moins un moyen de support (9, 10, 21 ; 23) de l'élément de poussée (1),
- insérer l'élément de poussée (1) avec le joint (4) dans l'étrier de frein (13) à travers une ouverture depuis le côté disque de frein
- connectée l'élément de poussée (1) au mécanisme d'ajustement (19),
- activer le dispositif de réinitialisation (18) de sorte que l'élément de poussée (1) soit connecté au mécanisme d'ajustement (19), en s'écartant ainsi axialement du disque de frein,
dans laquelle l'activation du dispositif de réinitialisation (18) est effectuée jusqu'à ce que la bague extérieure (6) du joint d'étanchéité (4) soit fixée à un segment (20) de l'étrier de frein (13).

14. Méthode selon la revendication 13, comprenant en outre l'étape consistant à
- activer le mécanisme d'actionnement de frein (3) de sorte que l'élément de poussée (1) se déplace axialement vers le disque de frein, en libérant ainsi la bague extérieure (6) du joint (4) à partir du moyen de support (9, 10, 21) de l'élément de poussée (1).

15. Méthode selon la revendication 13, comprenant en outre l'étape consistant à
- actionner le mécanisme d'actionnement de frein (3) de sorte que l'élément de poussée (1) se déplace axialement vers le disque de frein, en libérant ainsi l'élément de support (23) avec la bague extérieure (6) du joint (4) à partir du corps de l'élément de poussée (1), en permettant ainsi la mise en prise du moyen de support (23) avec le segment (20) de l'étrier de frein (13).
